# EUROPÄISCHE PATENTSCHRIFT

(11) **EP 1 331 085 B1**
(45) Veröffentlichungstag und Bekanntmachung des Hinweises auf die Patenterteilung: **24.11.2004**
(21) Anmeldenummer: 02027734.9
(22) Anmeldetag: 11.12.2002
(51) Int. Cl.: B29C 59/04, B29D 31/00, B44B 5/02, B23K 26/00, B29C 51/00

(54) **Verfahren zur Herstellung eines aus einer thermoplastischen Folie tiefgezogenen Formteils**
Manufacturing method for a deep-drawn molded article made from a thermoplastic sheet
Procédé de fabrication d'une pièce moulée formée par emboutissage d'une feuille thermoplastique

(30) Priorität: 25.01.2002 DE 10202752
(43) Veröffentlichungstag der Anmeldung: 30.07.2003
(73) Patentinhaber: Benecke-Kaliko Aktiengesellschaft, D-30419 Hannover (DE)
(72) Erfinder: Vogt, Günter, 31737 Rinteln (DE); Ohlinger, Rainer, 30519 Hannover (DE)
(74) Vertreter: Leine, Sigurd, Dipl.-Ing.

(56) Entgegenhaltungen:
- EP-A- 0 712 706
- EP-A- 1 238 789
- DE-A- 3 405 985
- DE-A- 3 502 244
- DE-A- 4 324 970
- DE-A- 4 326 874
- DE-A- 19 618 367
- DE-C- 19 855 962

## Beschreibung

Die Erfindung betrifft ein Verfahren der im Oberbegriff des Anspruchs 1 genannten Art zur Herstellung eines aus einer thermoplastischen Folie tiefgezogenen Formteils.

Durch DE 34 05 985 C2 ist ein Verfahren zur Herstellung einer Prägewalze zum kontinuierlichen Prägen der Oberfläche einer thermoplastischen Folie bekannt, bei der ausgehend von einer Narbungsvorlage in Form eines natürlichen Leders die Umfangsfläche der Prägewalze mit einer Negativform der Tiefenstruktur der natürlichen Ledervorlage versehen und mit der so geschaffenen Prägewalze unter Wärme und Druck kontinuierlich eine thermoplastische Folie geprägt wird, deren geprägte Oberfläche die Tiefenstruktur der Ledervorlage in Positivform aufweist. Es ist allgemein bekannt, eine deartig geprägte thermoplastische Folie durch Tiefziehen in räumliche Formteile umzuwandeln, beispielsweise in Innenausstattungsteile von Kraftfahrzeugen.

Bei diesem Tiefziehvorgang wird die thermoplastische Folie in Abhängigkeit von der räumlichen Form des herzustellenden Formteils unterschiedlich gedehnt, so daß auch die Narbungsstruktur unterschiedlich gedehnt ist. Dadurch entsteht der Nachteil, daß das hergestellte Formteil über seine Oberfläche ein unterschiedliches Aussehen hat, was unerwünscht ist.

Der Erfindung liegt die Aufgabe zugrunde, ein Verfahren der im Oberbegriff des Anspruchs 1 genannten Art anzugeben, bei der die beim Stand der Technik auftretenden Nachteile vermieden sind und das Aussehen des tiefgezogenen Formteils verbessert ist.

Das der Erfindung zugrundeliegende Verfahren zur Herstellung eines aus einer thermoplastischen Folie tiefgezogenen Formteils,
- bei dem die Oberfläche der thermoplastischen Folie mittels einer eine negative Tiefenstruktur aufweisenden Prägewalze unter Wärme und Druck mit einer positiven Tiefenstruktur versehen wird und
- bei dem danach ein Teil der Folie in einer Tiefziehvorrichtung tiefgezogen wird,
ist **dadurch gekennzeichnet,** daß die negative Tiefenstruktur der Prägewalze wenigstens in einer Ausdehnung der Oberfläche der Prägewalze in den Flächenbereichen verdichtet wird, in denen beim Tiefziehvorgang eine Dehnung erfolgt.

Der Grundgedanke dieser Lehre besteht darin, der unvermeidbaren, über die Fläche ungleichmäßigen Dehnung beim Tiefziehvorgang eine entsprechende Verdichtung der für den Tiefziehvorgang bestimmten thermoplastischen Folie gegenüberzustellen, wobei diese Verdichtung natürlich in den Flächenbereichen erfolgt, in denen beim Tiefziehvorgang eine Dehnung erfolgt. Beim Tiefziehvorgang wird somit praktisch die vorher durchgeführte Verdichtung wieder aufgehoben und dadurch eine Tiefenstruktur im fertigen Formteil erzielt, die über dessen gesamte Oberfläche weitgehend oder vollständig gleichmäßig ist.

Da die für den Tiefziehvorgang vorbereitete thermoplastische Folie in einem kontinuierlichen Vorgang durch die Prägewalze unter Wärme und Druck mit der positiven Tiefenstruktur versehen wird, sieht eine Weiterbildung der Erfindung vor, daß die Verdichtung der Tiefenstruktur nicht erst in der fertig geprägten thermoplastischen Folie erfolgt, sondern bereits durch eine entsprechende Verdichtung der negativen Tiefenstruktur in der Prägewalze, so daß nach dem Prägevorgang die thermoplastische Folie in der gewünschten Weise die Verdichtungen der Oberflächenstruktur in Abhängigkeit von der Dehnung beim Tiefziehvorgang aufweist.

Zeckmäßigerweise entspricht das Maß der Verdichtung dem Maß der Dehnung.

Gemäß einer Ausführungsform des Grundgedankens des Erfindung erfolgt die Verdichtung der negativen Tiefenstruktur in der Oberfläche der Prägewalze durch Steuerung der Relativbewegung eines die Tiefenstruktur in der Prägewalze erzeugenden Lasers in bezug zu der Oberfläche der Prägewalze. Dies bedeutet, daß eine Verdichtung durch Verlangsamung der Relativbewegung zwischen Laser und Prägewalze bewirkt wird, und zwar je nach Bedarf nicht nur in Umfangsrichtung, sondern auch in Axialrichtung der Prägewalze.

Gemäß einer Ausführungsform des Grundgedankens der Erfindung wird die Oberfläche der Prägewalze aus Teiloberflächen zusammengesetzt. Die Teiloberflächen haben dabei einen unterschiedlichen Verdichtungsgrad entsprechend dem Dehnungs- oder Ziehgrad beim nachfolgenden Tiefziehvorgang, wobei der Verdichtungsgrad vorzugsweise im wesentlichen umgekehrt proportional zu den Dehnungs- oder Ziehgraden beim Tiefziehvorgang ist. Aufgrund der unterschiedlichen Verdichtung der Teiloberflächen ändert sich auch deren Flächenausdehnung. Je größer der Verdichtungsgrad ist, um so kleiner wird die Teiloberfläche. Aus diesem Grunde ist eine Flächenanpassung der Teiloberflächen beim Zusammensetzen zu der Oberfläche der Prägewalze erforderlich, was jedoch in beliebiger, jedem Fachmann geläufiger Weise erfolgen kann.

Eine Ausführungsform des erfindungsgemäßen Grundgedankens besteht darin, daß die Tiefenstruktur der Oberfläche der Prägewalze zunächst optisch als schwarzweißes oder farbiges Bild dargestellt wird und die Verdichtungen durch optische Verzerrungen des Bildes erzeugt werden. Anhand des so verzerrten Bildes wird die Tiefenstruktur der Oberfläche der Prägewalze erzeugt. Die Umwandlung der Tiefenstruktur in ein optisches Bild schafft also die Möglichkeit, die Verdichtungen auf optische Weise zu erreichen.

Eine Weiterbildung dieser Ausführungsform besteht darin, daß das verzerrte Bild fotoelektrisch abgetastet und mit einem so gebildeten elektrischen Signal die Intensität eines Laserstrahls gesteuert wird, der entsprechend der Abtastung des Bildes relativ zu der Oberfläche der Prägewalze bewegt und so die Tiefenstruktur in der Oberfläche der Prägewalze erzeugt wird.

Bei der Ausführungsform des erfindungsgemäßen Verfahrens, bei der die Oberfläche der Prägewalze aus Teiloberflächen zusammengesetzt wird, ist eine Weiterbildung zweckmäßig, bei der die Tiefenstruktur einer Teiloberfläche in einem elektronischen Speicher als Teilobeflächeninformation gespeichert wird. Diese Speicherung ist für die spätere Verarbeitung vorteilhaft. Zusätzlich wird ein Teil einer Folie in einer für den Tiefziehvorgang geeigneten Größe mit einem vorzugsweise optischen Raster versehen und danach dem Tiefziehvorgang unterworfen. Dies ermöglicht es, anhand der Verformung des Rasters beim Tiefziehvorgang flächenbezogen Dehnungswerte zu gewinnen. Danach wird die gespeicherte Teiloberflächeninformation mehrfach aus dem Speicher ausgelesen und jeweils in Abhängigkeit von den flächenbezogenen Dehnungswerten verdichtet. Schließlich werden die flächenbezogen verdichteten Teiloberflächeninformationen rechnerisch zu einer Gesamtinformation zusammengesetzt, mit der die Intensität eines Laserstrahls gesteuert wird, der relativ zu der Oberfläche einer Prägewalze bewegt wird, so daß so die Tiefenstruktur an der Oberfläche der Prägewalze erzeugt wird. Bei dieser Ausführungsform des erfindungsgemäßen Grundgedankens ist es vorteilhaft, wenn die Übergänge zwischen benachbarten Teiloberflächeninformationen unterschiedlichen Verdichtungsgrades bearbeitet werden, derart, daß Übergänge zwischen den Tiefenstrukturen unterschiedlichen Verdichtungsgrades weitgehend unsichtbar sind. Da die Oberflächeninformation zweckmäßigerweise als digitale Information vorliegt, die in einem digitalen elektronischen Speicher gespeichert ist, können für die Bearbeitung der Übergänge zwischen benachbarten Teiloberflächeninformationen Verfahren angewendet werden, die jedem Informatikfachmann geläufig und beispielsweise durch DE 4326874 C3 bekannt sind.

## Patentansprüche

1. Verfahren zur Herstellung eines aus einer thermoplastischen Folie tiefgezogenen Formteils,
- bei dem die Oberfläche der thermoplastischen Folie mittels einer eine negative Tiefenstruktur aufweisenden Prägewalze unter Wärme und Druck mit einer positiven Tiefenstruktur versehen wird und
- bei dem danach ein Teil der Folie in einer Tiefziehvorrichtung tiefgezogen wird,
**dadurch gekennzeichnet, daß** die negative Tiefenstruktur der Prägewalze wenigstens in einer Ausdehnung der Oberfläche der Prägewalze in den Flächenbereichen verdichtet wird, in denen beim Tiefziehvorgang eine Dehnung erfolgt.

2. Verfahren nach Anspruch 1, **dadurch gekennzeichnet, daß** das Maß der Verdichtung dem Maß der Dehnung entspricht.

3. Verfahren nach Anspruch 1, **dadurch gekennzeichnet, daß** die Verdichtung in der negativen Tiefenstruktur in der Oberfläche der Prägewalze durch Steuerung der Relativbewegung eines die Tiefenstruktur in der Prägewalze erzeugenden Lasers in bezug zu der Oberfläche der Prägewalze bewirkt wird.

4. Verfahren nach Anspruch 1, **dadurch gekennzeichnet,**
- **daß** die Oberfläche der Prägewalze aus Teiloberflächen zusammengesetzt wird und
- **daß** die Tiefenstruktur der Teiloberflächen mit unterschiedlichem Verdichtungsgrad gebildet wird,

5. Verfahren nach Anspruch 4, **dadurch gekennzeichnet, daß** der Verdichtungsgrad im wesentlichen umgekehrt proportional zu den Dehnungsgraden beim Tiefziehvorgang ist.

6. Verfahren nach Anspruch 1, **dadurch gekennzeichnet,**
- **daß** die Tiefenstruktur der Oberfläche der Prägewalze zunächst optisch als schwarz-weißes oder farbiges Bild dargestellt wird,
- **daß** die Verdichtungen durch optische Verzerrungen des Bildes erzeugt werden und
- **daß** anhand des verzerrten Bildes die Tiefenstuktur in der Oberfläche der Prägewalze erzeugt wird.

7. Verfahren nach Anspruch 6, **dadurch gekennzeichnet, daß** das verzerrte Bild fotoelektrisch abgetastet wird und mit einem so gebildeten elektrischen Signal die Intensität eines Laserstrahls gesteuert wird, der entsprechend der Abtastung des Bildes relativ zur Oberfläche der Prägewalze bewegt und so die Tiefenstruktur in der Oberfläche der Prägewalze erzeugt wird.

8. Verfahren nach Anspruch 4, **dadurch gekennzeichnet,**
- **daß** die Tiefenstruktur einer Teiloberfläche in einem elektronischen Speicher als Teiloberflächeninformation gespeichert wird,
- **daß** ein Zuschnitt einer Folie in einer für den Tiefziehvorgang geeigneten Größe mit einem vorzugsweise optischen Raster versehen und danach dem Tiefziehvorgang unterworfen wird,
- **daß** anhand der Verformung des Rasters beim Tiefziehvorgang flächenbezogen Dehnungswerte gewonnen werden,
- **daß** die gespeicherte Teiloberflächeninformation mehrfach aus dem Speicher ausgelesen und jeweils in Abhängigkeit von den flächenbezogenen Dehnungswerten verdichet wird, und
- **daß** die flächenbezogen verdichteten Teiloberflächeninformationen rechnerisch zu einer Gesamtinformation zusammengesetzt werden,
- und **daß** mit dieser Gesamtinformation die Intensität eines Laserstrahls gesteuert wird, der relativ zu der Oberfläche einer Prägewalze bewegt wird, so daß so die Tiefenstruktur in der Oberfläche der Prägewalze erzeugt wird.

9. Verfahren nach Anspruch 8, **dadurch gekennzeichnet, daß** die Übergänge zwischen benachbarten Teiloberflächeninformationen unterschiedlichen Verdichtungsgrades bearbeitet werden, derart, daß Übergänge zwischen den Tiefenstrukturen unterschiedlichen Verdichtungsgrades weitgehend unsichtbar sind.

## Claims

1. A method for the manufacture of a moulded article that is deep-drawn from a thermoplastic sheet,
- in which the surface of the thermoplastic sheet is provided with a positive depth structure by heat and pressure by means of an embossing roll comprising a negative depth structure and
- in which afterwards a part of the sheet is deep drawn in a deep-drawing device,
**characterised in that** the negative depth structure of the embossing roll is compacted at least in an extension of the surface of the embossing roll in the planar regions in which elongation occurs during the deep-drawing operation.

2. A method according to Claim 1,
**characterised in that** the degree of compaction corresponds to the degree of elongation.

3. A method according to Claim 1,
**characterised in that** the compaction in the negative depth structure in the surface of the embossing roll is made by controlling the relative movement of a laser producing the depth structure in the embossing roll in relation to the surface of the embossing roll.

4. A method according to Claim 1,
**characterised in that**
- the surface of the embossing roll is composed of partial surfaces and
- the depth structure of the partial surfaces is formed with a different degrees of compaction,

5. A method according to Claim 4,
**characterised in that** the degree of compaction is substantially inversely proportional to the degrees of expansion during the deep-drawing operation.

6. A method according to Claim 1,
**characterised in that**
- the depth structure of the surface of the embossing roll is firstly represented visually as a black-white or coloured image,
- the compactions are produced by optical distortions of the image and
- the depth structure in the surface of the embossing roll is produced by means of the distorted image.

7. A method according to Claim 6,
**characterised in that** the distorted image is photoelectrically scanned and by means of an electrical signal formed in this manner the intensity of a laser beam is controlled, which is moved corresponding to the scanning of the image relative to the surface of the embossing roll and thus the depth structure in the surface of the embossing roll is produced.

8. A method according to Claim 4,
**characterised in that**
- the depth structure of a partial surface is stored in an electronic memory as surface information for the partial surface,
- a blank of a sheet in a size suitable for the deep-drawing operation is provided with a preferably optical grid and afterwards is subjected to the deep-drawing operation,
- area-related expansion values are obtained by means of the deformation of the grid during the deep-drawing operation,
- the stored information for the partial surface is repeatedly read out of the memory and in each case is compacted as a function of the area-related expansion values, and
- the area-related compacted items of information for partial surfaces are collated mathematically to produce overall information,
- and by means of this overall information the intensity of a laser beam is controlled, which is moved relative to the surface of an embossing roll so that the depth structure in the surface of the embossing roll is produced.

9. A method according to Claim 8,
**characterised in that** the transitions between adjacent items of information for partial surfaces of different degrees of compaction are worked in such a manner that transitions between the depth structures having different degrees of compaction are largely invisible.

## Revendications

1. Procédé de fabrication d'une pièce façonnée obtenue par emboutissage profond d'une feuille thermoplastique,
dans lequel la surface de la feuille thermoplastique est pourvue d'une structure en creux positive au moyen d'un cylindre d'estampage présentant une structure en creux négative, sous l'action de la chaleur et de la pression, et
dans lequel une partie de la feuille est ensuite emboutie dans un dispositif d'emboutissage profond,
**caractérisé en ce que** la structure en creux négative du cylindre d'estampage est comprimée au moins dans une étendue de la surface du cylindre d'estampage, dans les zones de surface dans lesquelles se produit une dilatation lors de l'emboutissage profond.

2. Procédé selon la revendication 1, **caractérisé en ce que** la proportion de la compression correspond à la proportion de la dilatation.

3. Procédé selon la revendication 1, **caractérisé en ce que** la compression dans la structure en creux négative de la surface du cylindre d'estampage est provoquée par commande du mouvement relatif d'un laser produisant la structure en creux dans le cylindre d'estampage, par rapport à la surface du cylindre d'estampage.

4. Procédé selon la revendication 1, **caractérisé**
**en ce que** la surface du cylindre d'estampage est composée de surfaces partielles, et
**en ce que** la structure en creux des surfaces partielles est formée avec un degré de compression différent.

5. Procédé selon la revendication 4, **caractérisé en ce que** le degré de compression est sensiblement inversement proportionnel aux degrés de dilatation lors de l'emboutissage profond.

6. Procédé selon la revendication 1, **caractérisé**
**en ce que** la structure en creux de la surface du cylindre d'estampage est d'abord représentée optiquement sous forme d'image noir et blanc ou image couleur,
**en ce que** les compressions sont produites par des distorsions optiques de l'image, et
**en ce qu'**à l'aide de l'image déformée on produit la structure en creux dans la surface du cylindre d'estampage.

7. Procédé selon la revendication 6, **caractérisé en ce que** l'image déformée est analysée de manière photo-électrique et, avec un signal électrique ainsi formé on commande l'intensité d'un rayon laser qui est déplacé, suivant l'analyse de l'image, par rapport à la surface du cylindre d'estampage, et on produit ainsi la structure en creux dans la surface du cylindre d'estampage.

8. Procédé selon la revendication 4, **caractérisé**
**en ce que** la structure en creux d'une surface partielle est mémorisée dans une mémoire électronique en tant qu'information de surface partielle,
**en ce qu'**un flan d'une feuille est pourvu, dans une dimension convenant à l'emboutissage profond, d'une trame de préférence optique et est ensuite soumis à l'emboutissage profond,
**en ce qu'**à l'aide de la déformation de la trame lors de l'emboutissage profond on obtient des valeurs de dilatation rapportées à la surface,
**en ce que** l'information mémorisée de surface partielle est extraite plusieurs fois de la mémoire et est comprimée chaque fois en fonction des valeurs de dilatation rapportées à la surface, et
**en ce que** les informations comprimées de surface partielle rapportées à la surface sont assemblées par le calcul en une information globale,
et **en ce qu'**avec cette information globale on commande l'intensité d'un rayon laser qui est déplacé par rapport à la surface d'un cylindre d'estampage, de manière que la structure en creux soit ainsi produite dans la surface du cylindre d'estampage.

9. Procédé selon la revendication 8, **caractérisé en ce que** les transitions entre des informations voisines de surface partielle de degrés de compression différents sont traitées de manière que les transitions entre les structures en creux de degrés de compression différents soient largement invisibles.
